# EUROPEAN PATENT APPLICATION

(11) **EP 1 176 500 A1**
(43) Date of publication of application: **30.01.2002**
(21) Application number: 00116447.4
(22) Date of filing: 28.07.2000
(51) Int. Cl.: G06F 3/12

(54) **Method and apparatus for job preview in printer device**

(71) Applicant: Hewlett-Packard Company, A Delaware Corporation, Palo Alto, CA 94304 (US)
(72) Inventor: Estavillo, Cristina, 08190 Sant Cugat del Vallès, Barcelona (ES); Gomez, Xavier, 08860 Castelldefels, Barcelona (ES)
(74) Representative: Yennadhiou, Peter

(57) **Abstract**

A printer device (200) is provided with a print manager module and preview generator module capable of generating a preview image of a print job in a form which accurately reflects the format and settings of the particular printer device. The print image is accessible via a web server (206) as an HTML page which can be viewed by a web browser on a client computer. A user may obtain a preview image on a visual display unit of the client computer which accurately describes a print image which will be printed by the printer device according to the local settings of that printer device.

## Description

### Field of the Invention

The present invention relates to the field of printers, and particularly although not exclusively to a method and apparatus for visualising a print image in a form in which the print image will be printed on a specific printer device.

### Background to the Invention

A print preview facility is known in many prior art raster image processor (RIP's) and in some known printer drivers. Such preview applications are run on host platforms, and operate by rendering an image print job before sending it to a printer, and allow a user to visualise the layout of the print job, and confirm the layout prior to printing. The user may cancel a print job after visualisation, or may confirm printing.

There are several disadvantages with prior art preview solutions as follows:

Firstly, a preview image presented on a visual display unit may not be an accurate representation of an actual printed image to be printed by the printer. There may be differences between the preview visualised at a host computer, driving a printer, and the final image rendered in the printer. Such differences may be due to
- Use of different render engines from printer to printer
- Different printer settings, for example margins, which affect the size of the image
- Difference in available font options within different printers. It may be that a preview software displays an image using fonts which are unavailable in the actual printer.
In prior art printers, driven by a computer having a driver, information concerning the fonts, settings, renderings and layout which are specific to the printer are not communicated by the printer to the host computer from which the printer is driven.

Secondly, there is an impact on the performance of the host platform due to the rendering process. Rendering of images is demanding upon processing power, and a rendering process carried out in a host computer may affect the performance of the host for running other applications.

Thirdly, in order to offer preview functionality each operating system platform, for example Windows® , Macintosh® OS, Unix® or Linux® , requires its own render. There is a cost of development per platform in order to develop a plurality of renders.

### Summary of the Invention

One object of the present invention is to provide a preview facility which enables an accurate preview of a print job, in which local printer settings are accounted for in a preview image, and which provides an accurate representation of a print image as it would actually be printed out a print media by a specific printer.

A further object of the present invention is to provide a preview functionality which is host platform independent.

A further object of the invention may be to reduce an overall cost of developing and maintaining a preview product.

A further objective of the present invention may be to reduce the performance cost requirement of a preview function on a client computer terminal.

A further objective of the present invention may be to reduce resources needed on the printer platform to generate a preview image.

According to a first aspect of the present invention there is provided a printer device comprising:
a physical printer mechanism (100, 200) capable of producing printed images on a print media;
an electronic data processing means (203-205) capable of controlling said physical print mechanism;
a bi-directional communications port (202) capable of sending and receiving data;
a preview generation means 207 for generating a print preview data, and
a server means 206 capable of presenting said preview data in page format readable via said bi-directional communications port.

In a specific implementation of the invention, a render device that processes a print job in order to generate a preview of that job is the same render device that generates the printing job. It takes into account all the printer internal settings that are unknown by the host, and generates an accurate job preview.

A preview is generated by a printer and accessed by a web browser resident on a client computer terminal, making it easy to get the preview from any host platform, with no further development cost at the host. As the preview is generated in the printer, it frees the host from generating the preview and leaves the host resources available for other tasks required by a user, for example running applications.

According to a second aspect of the present invention there is provided:
a plurality of printer devices;
a plurality of client computer devices, each having a user interface having a visual display unit;
each one of said plurality of printer devices comprising a physical printer mechanism, at least one communications port, a control means for controlling said ports and said printer mechanism, a preview generation means for generating a preview image data of a print job, and a server means capable of generating a page viewable via said port;
each said client computer device comprising:
at least one processor, an operating system, at least one communications port for communicating said client computer device with a said printer device, a user interface having a visual display unit, a driver means for driving a said printer device, and a browser means for browsing a page display on a said printer device.

According to a third aspect of the present invention there is provided a method of generating a preview image for preview of a print job, said method comprising the steps of:
receiving a print job (501);
requesting a preview of said print job (500);
rendering (507) said image data of said print job to generate a rendered image file;
generating a preview image from a rendered image, taking into account specific settings and printer characteristics.

According to a fourth aspect of the present invention there is provided a printing means for printing images, said printing means comprising:
a printer mechanism;
a preview generation means for generating a preview image of said print job,
wherein said preview generation means operates to preview said print job in a form substantially identical to a form in which said print job will be printed by said printer mechanism.

The invention aims to offer a means and apparatus for viewing an appearance on a user's print job, both during printing of the job, and/or before a page of print image is physically printed, so that no user time or print media e.g. paper or ink are wasted.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 illustrates schematically a printing system and apparatus comprising one or a plurality of client devices and one or a plurality of server devices for printing documents in accordance with a specific implementation of the present invention;
Fig. 2 illustrates schematically hardware, firmware and software architectures of the client and server devices of Fig. 1;
Fig. 3 illustrates schematically data and instructions sent between the client and server devices of Fig. 1;
Fig. 4 illustrates schematically an overview of an operation for activating a print job;
Fig. 5 illustrates schematically a logical architecture of a printer device, showing handling of browser requests and print jobs;

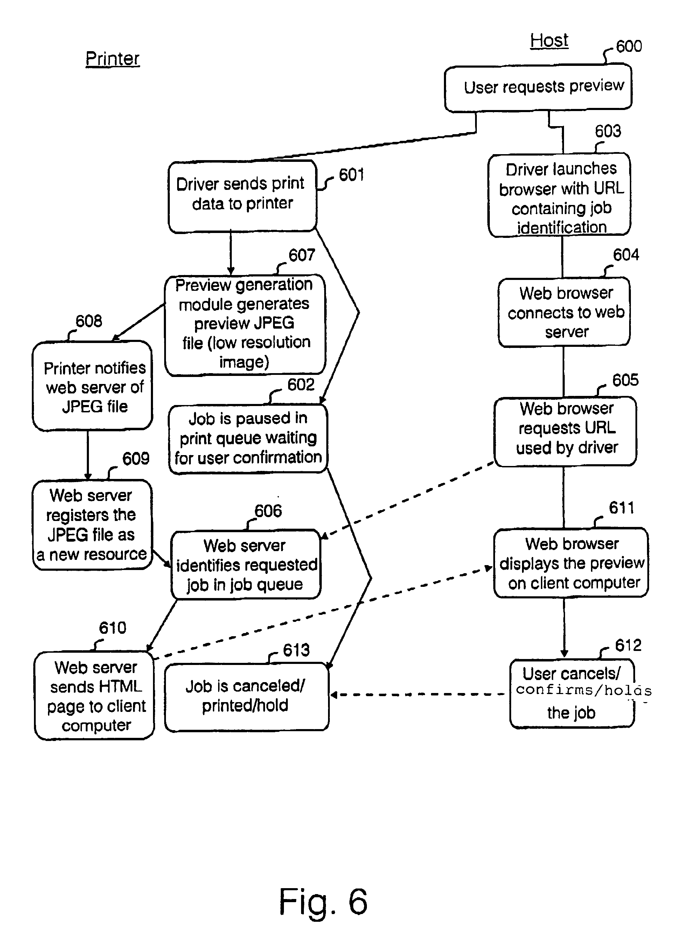

Fig. 6 illustrates schematically process steps carried out by printer devices and client computers in the system of Fig. 1 for providing a preview image at a client terminal display, and for printing or canceling a print job;
Fig. 7 illustrates schematically an example of a preview progress display presented at a client terminal, but without a rendered image; and
Fig. 8 illustrates schematically a preview image presented at a client terminal in accordance with a printer's internal settings and showing a rendered image in a form to be printed.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

In this specification, the term 'host computer' is used to describe any computer terminal which can communicate with a printer device, and having a web browser. The terms 'host', 'host computer' and 'client computer' are used interchangeably to mean the same thing and shall be construed accordingly.

Specific implementations of the invention provide a job preview visualization of a job as it will be actually printed on a print media, via a web browser resident on a client computer. The job preview shows a visual preview display of an image to be printed by a user on a specific printer device. The preview is generated by a specific preview image operation mechanism which uses the existing printer embedded RIP, made available by a web server resident on the printer device, and can be viewed by the web browser based in a client computer, which may be hosting the printer via a driver, and which may access the printer over a network. Visualization of a print preview on a visual display device of the client computer is available to the user. The user can browse a web page generated by the printer, the web page showing an accurate preview of an image to be printed, taking into account all the particular settings of that printer including fonts, rendering, margin size color conversions which depend on media type colors, and other parameters which are variable from printer to printer.

As the preview is generated by the printer and accessed by the web browser, the preview may be received by any client platform, with no development cost.

Further the cost of developing and maintaining a second page description language (PDL) interpreter in the host may be avoided by using specific implementations according to present invention. There is no need to port an interpreter to a different operating system.

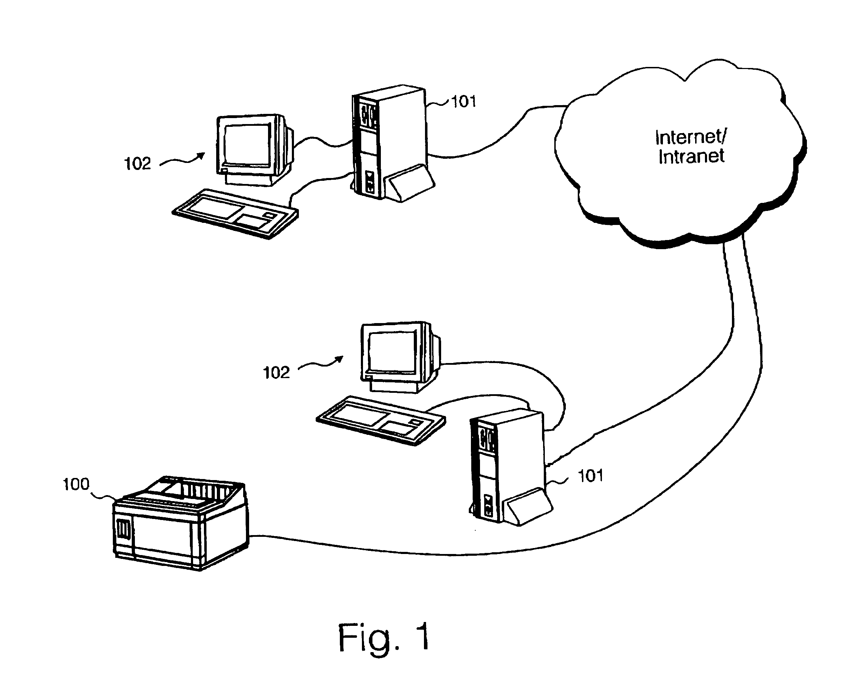

Referring to Fig. 1 herein, there is illustrated schematically in physical view a printing system and apparatus according to a specific implementation of the present invention. The system comprises one or a plurality of client computer devices, for example PC's 101, the client devices provided with one or more interfaces 102 comprising visual display units on which a print preview display can be viewed by one or more users. Individual ones of the client computers communicate with individual ones of the printer devices. The printers may be connected to and driven from the computer devices, the printers being connected to the computer device by a suitable connection such as an ethernet connection. Other ones of the client computers may have access to the printer device via a local area network, a virtual private network (VPN), an intranet or via the internet. The computers may be personal computers (PC), Macintosh computers or other individual computers, and may run a variety of operating systems, for example Windows, Linux, or Macintosh operating systems.

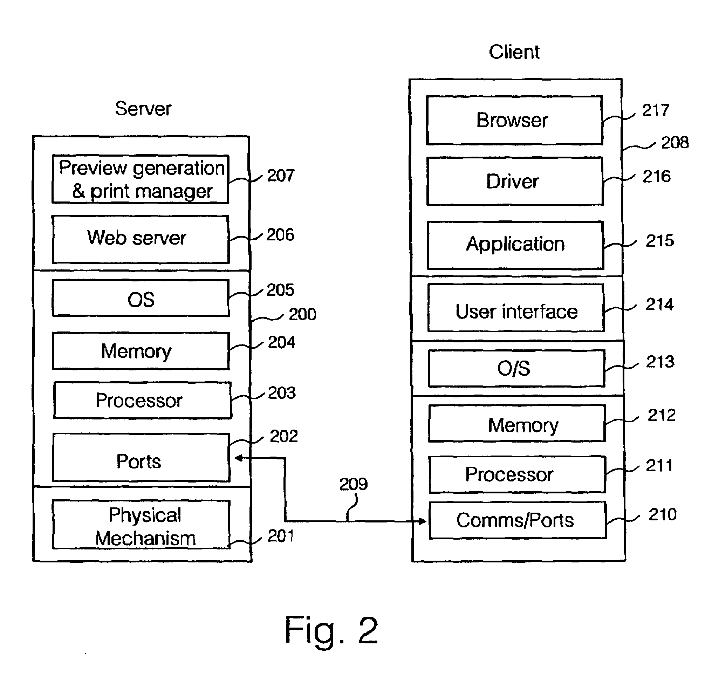

Referring to Fig. 2 herein, there is illustrated in architectural form a client computer and printer. The printer 200 comprises a physical printing mechanism 201 for producing a physical image on a print medium, e.g. paper, the physical mechanism being capable of printing a rendered image in either black and white or color; one or a plurality of ports 202 for communicating with a client device for receiving print data and print instructions; a processor 203 and memory 204 for controlling the printing mechanism and communications via the ports to handle print jobs and control printing of the print jobs as images, the processor and memory operating in accordance with an operating system 205; a web server application 206 capable of generating a web page containing a preview of a print job, and a preview generator 207 and print manager module for generating the preview and managing a plurality of print jobs in a print job queue.

A client computer 208 connected to the printer comprises one or a plurality of communication ports 210; a processor 211 and a memory 212; an operating system 213 for example Windows, Linux, Unix or the like; a user interface 214 including a visual display unit capable of displaying a preview image; an application 215 capable of generating print data, for example images; a print driver 216 for driving server printer 200; and a web browser 217 for reading a web page presented by the server printer 200.

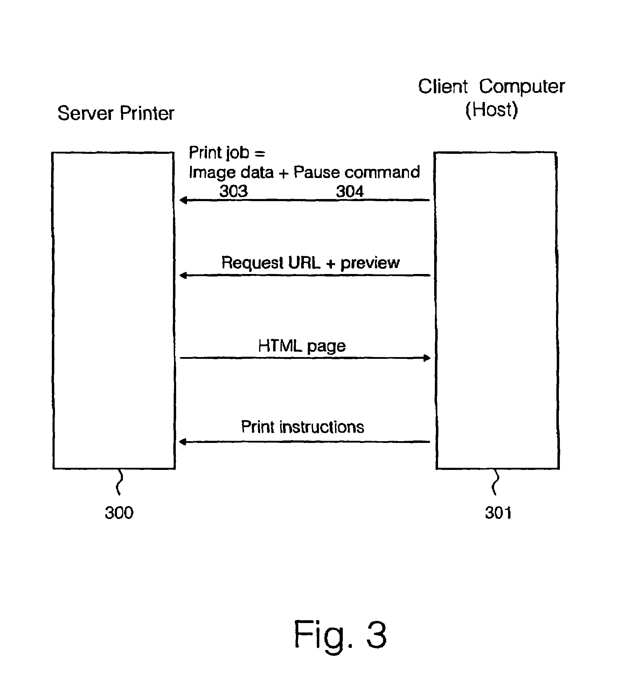

Referring to Fig. 3 herein, there is illustrated schematically communications between a first client computer 301 and the printer via a network connection.

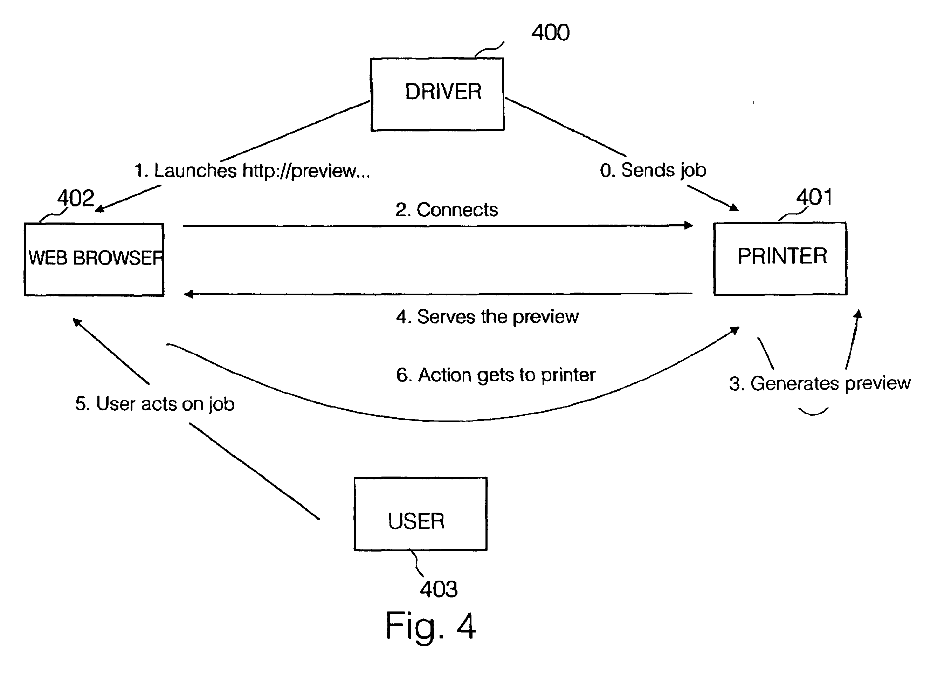

Referring to Fig. 4 herein, there is illustrated schematically activation of a print job by a user. Driver 400 sends a print job to a printer device 401. Simultaneously, the driver 400 launches a preview page. Web browser 402 connects to printer 401, which contains a preview generator which generates the preview page. The preview page is served to the web browser 402. A user 403 acts on a print job, having viewed the preview, to either print or cancel the print job, and via web browser 402 sends a print or cancel signal to the printer 401.

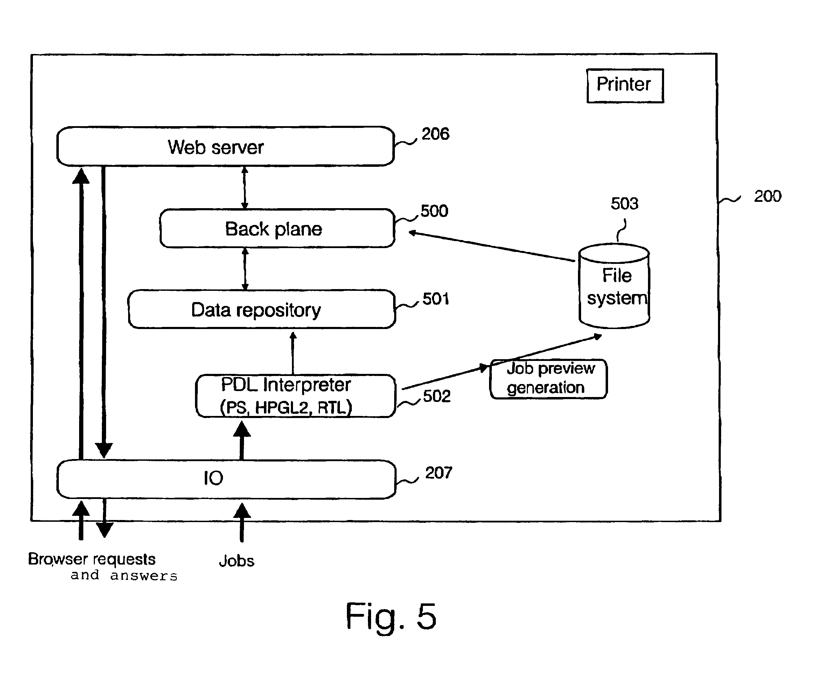

Referring to Fig. 5 herein, there is illustrated schematically a logical architecture of server printer 200, showing data flows and request flows within the architecture. Print jobs are received via input/output ports 207, as are browser requests. Data repository 501 stores data describing printer settings, such as first types, font size, ink color, ink availability, margin types, page layout which are specific to the set up of that particular printer. Browser requests are directed to web server module 206, whereas print jobs containing image data are directed to a page description language interpreters module 502 which renders the image data and creates a sub-sampled image finally encoded in JPEG format. This image reflects exactly the preview of the image that will be printed. It reflects the margins, print-media dimensions, fonts, appropriate color conversions depending upon media type characteristics, and other printer settings that are unknown by the host. Job previews can be stored in a filing database 503. The web server and page description language module 502, along with the data repository module 501 are connected together through a back-plane module 500. The back-plane module 400 can receive files from the filing database 503.

In step 600 a user requests a print preview from a client computer. The request is made by way of a key command typed in by the user, or by way of a pointing device command, for example a mouse device being manually clicked when a pointer icon corresponds with a print preview icon displayed on a visual display unit of the client computer. In step 601, the driver sends a print job to the printer. The print job includes an image data 303, and a PAUSE command 304 causing the preview generation and print manager module 207 to pause the print job in a queue of print jobs in step 602, and await user confirmation. The print data also contains a name data and a timestamp data, denoting a time when the print data was generated, and enabling the print job to be identified.

In step 603, the driver launches a web browser with a URL containing a job identification. In step 604, browser module 217 connects with web server 206, requesting the web server as a resource in step 605. The request sent by the web browser contains a URL used by the driver. The URL used by the driver comprises:
- An internet protocol address of the printer, which is known by the driver 216
- A CGI script formed by the keyboard 'preview', plus parameters which identify the print data, i.e. a job name and a timestamp when the print data was generated. The CGI script has the form
   http:\\printerIP\preview?name=jobname?time=timestamp

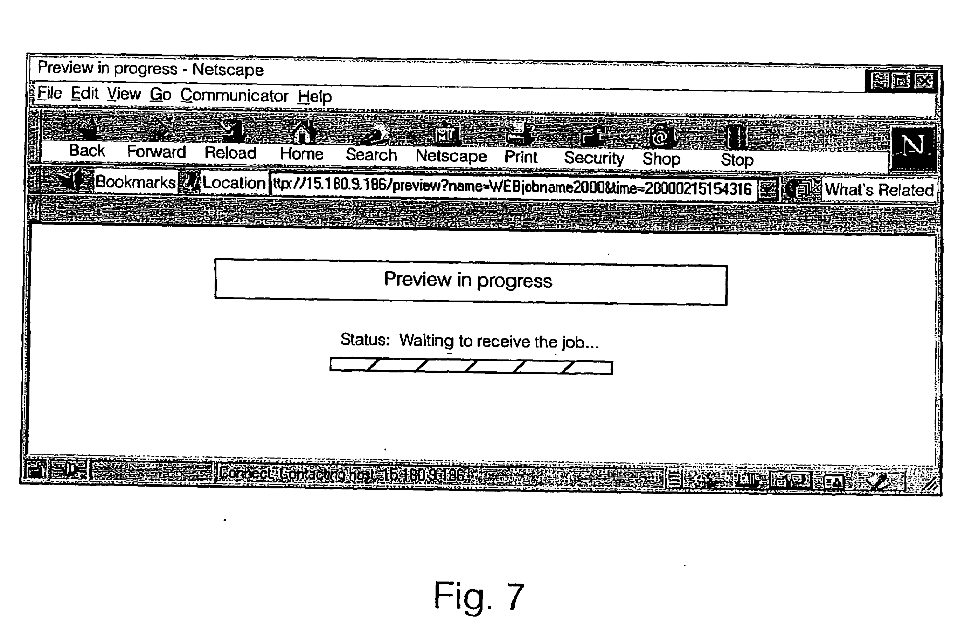

In step 606 the web server identifies the requested print job in the printer's job queue using the URL, and in particular the name and time data fields from the URL. The web server 206 looks into the data repository module 401 via back-plane 500 for the preview of the requested job. If the preview is not ready, the data repository serves a generic HTML page which informs the web browser of the previews progress. This page is refreshed automatically, so that progress information displayed on the generic HTML page is periodically updated. An example of such a page is shown in Fig. 7 herein.

In step 607, which can occur in parallel with steps 603-606, the PDL interpreter embedded in the printer renders the image data of the print job and the image preview generator generates a low resolution image in encoded JPEG format. Print manager 207 notifies web server module 206 of the JPEG file in step 608, and in step 609 web server module 206 registers the JPEG file as a new resource. In step 610, the web server 206 in the printer displays an HTML page. The preview display HTML page is displayed by the browser module 217 to the user in step 611 as a visual display on a user interface of the client computer.

Whilst the PDL module 402 is rendering the image, a preview progress report view may be generated and made available for display by the web server 206 by a web browser 217 on a client computer. An example of a preview progress report display is illustrated in Fig. 7 herein. A preview progress report display comprises a HTML page displaying information concerning a progress of a print previewed. For example, status may include 'waiting to receive a job'. A different status may be *'ripping 46%'*

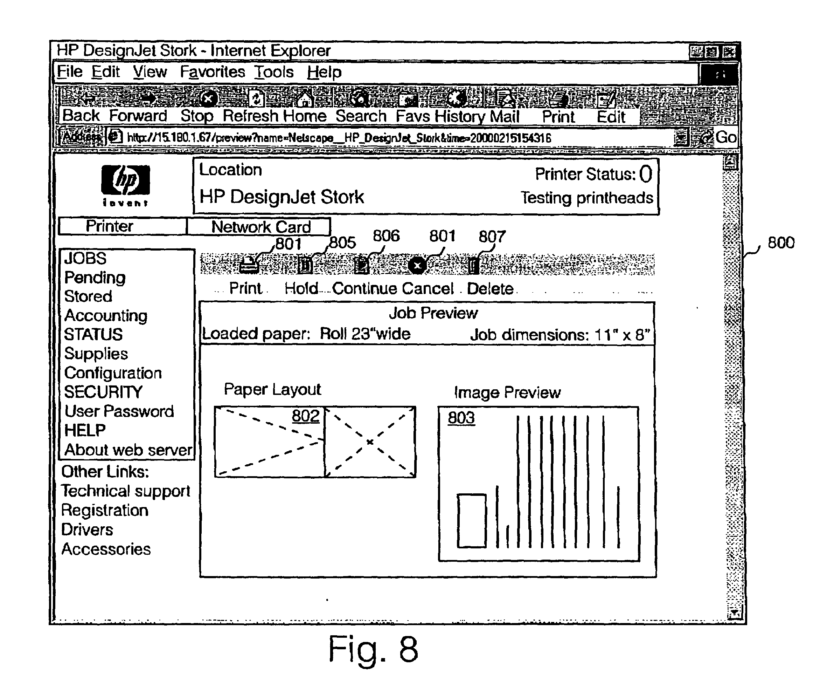

Once the PDL module 502 has finished rendering the image, rendered image data may be sent from the web server module to the web browser module 217 in order to complete the HTML page, resulting in a visual display 800 at the client computer as illustrated schematically with reference to Fig. 8 herein.

Having been presented with a display of the HTML page in step 511, a user may then activate a print icon 801 which sends a print command which causes web server module 216 to send a print command to the print manager 207 in step 512, resulting in the print manager printing the image to a print medium in step 513. Alternatively, the user may activate a cancel icon 801 resulting in a cancel command being sent by the web server module 216 to the print manager 207 for cancellation of the print job and the preview in step 515. The HTML preview page 800 also comprises a paper layout display 802 in addition to a document image preview display 803, and lists relevant information such as a type of paper which is loaded onto the printer, a dimension of the paper, a status of the printer including whether the printer has enough supplies, whether the printer is in usage, and whether the printer contains continuation sheets of print media, and lists jobs pending. There are also a hold icon 805 for holding a pending print job in the print queue, a continue icon 806 for continuing with a print job in the print queue and a delete icon 807 for deleting a print job in the print queue.

Since the preview generation and print manager 207 generates a print preview data in a format which is specific to the individual settings of the printer device, the HTML page compiled by the web server module 206 and viewed by web browser module 217 shows a preview image of an item to be printed in the exact format in which the item will be printed so that the viewer views a print preview image which accurately reflects the actual printed image on the print media.

In a networked system comprising a plurality of printer devices, each configured differently in terms of font settings, paper size, color/black and white cartridges, and a plurality of client terminals each having access to a plurality of differently set up printers, a user may obtain print previews from each one of the different printers, to select a print format which best suits the user. The print preview facility allows the user to see a preview of the print image on a particular printer in the exact form in which it will be printed. Thus, in a system having many printers, a user at a client terminal may compare and select various different print formats according to different printer settings of a plurality of individual different printers in a network system, whilst avoiding unnecessarily expending print media to determine the layout of the final printed image.

Each individual printer may be supplied at point of shipping, with the web server module 206, and a preview generation and print manager module 207. Thus, no additional software needs to be installed on a new printer or additional printer which may be added to an existing network of computers and printers. A selection of print commands for printing or canceling a job are available at the client computer within a preview display containing an HTML image of a final print in a form which accurately reflects the image printed on the print media by a particular printer.

On addition of a printer to a host computer or a network of computers, the driver of the host computer need only 'find' the new printer via the operating system of the computer, in order to install that printer. Once installed, to configure the printer to access the preview through the web, the user has to enter the IP address of the printer into the driver and can send print data to the printer, along with name data specifying a job name of a print job, and time data specifying a timestamp of a print data to that particular printer.

Communications need not be made over the internet. As long as a browser can access the preview generation means via a bi-directional link, and the printer can communicate with the browser bi-directional link, the raster image processor need not be provided in a same housing as a printer mechanism.

## Claims

1. A printer device comprising:
a physical printer mechanism (100, 200) capable of producing printed images on a print media;
an electronic data processing means (203-205) capable of controlling said physical print mechanism;
a bi-directional communications port (202) capable of sending and receiving data;
a preview generation means 207 for generating a print preview data, and
a server means 206 capable of presenting said preview data in page format readable via said bi-directional communications port.

2. The printer device as claimed in claim 1, wherein said preview image is displayed in a form which visually represents an image of a print job in a form as printed taking into account individual printer settings of said printer device.

3. The printer device as claimed in claim 1, wherein said preview image is displayed in a form which visually represents an image of a print job in a form as printed taking into account settings of said printer device selected from the set:
font type;
font size;
page margins;
print media dimensions;
appropriate color conversion depending on media type characters.

4. The printer device as claimed in anyone of the preceding claims, wherein said page data is presented in a form readable by a browser (217).

5. The printer device as claimed in any one of the preceding claims, wherein said preview image data is presented in the form of an HTML Page.

6. The printer as claimed in any one of the preceding claims, wherein said printer operates to store a print job in a print queue, said print job stored in said queue having a URL address stored within said printer said address comprising:
a printer address;
a job name data; and
a timestamp data.

7. A system of networked computer entities comprising:
a plurality of printer devices;
a plurality of client computer devices, each having a user interface having a visual display unit;
each one of said plurality of printer devices comprising a physical printer mechanism, at least one communications port, a control means for controlling said ports and said printer mechanism, a preview generation means for generating a preview image data of a print job, and a server means capable of generating a page viewable via said port;
each said client computer device comprising:
at least one processor, an operating system, at least one communications port for communicating said client computer device with a said printer device, a user interface having a visual display unit, a driver means for driving a said printer device, and a browser means for browsing a page display on a said printer device.

8. The system as claimed in claim 7, wherein said browser device is capable of browsing a page image of a print preview, said page image displaying a preview image which is a true image representation of a print image in a form in which it may be printed by a said printer device, taking into account the specific settings of that printer.

9. The system as claimed in claim 7 or 8 wherein said user interface is arranged to send a print command to said printer to print a print image in a same format as identified by a said print preview on said visual display unit.

10. A method of generating a preview image for preview of a print job, said method comprising the steps of:
receiving a print job (501);
requesting a preview of said print job (500);
rendering (507) said image data of said print job to generate a rendered image file; and
generating a preview image from a rendered image taking into account specific settings and printer characteristics.

11. The method as claimed in claim 10, further comprising the steps of:
registering (509) said printer image file as a resource in a web server;
presenting (511) said preview as a web page.

12. The method as claimed in claim 10, wherein said preview page contains a preview image data of a print job in a form for printing said print job on said printer, taking into account local settings and capabilities of said printer device.

13. The method as claimed in any one of claims 10 to 12, wherein said print job comprises:
a job name data.

14. The method as claimed in any one of the preceding claims, wherein said print job comprises:
a timestamp data.

15. The method as claimed in any one of claims 10 to 14, wherein said local printer settings are selected from the set;
font settings;
margin settings;
rendering settings;
print media size and type settings;
color settings;
internal printer settings.

16. The method as claimed in any one of claims 10 to 15, further comprising the step of:
displaying a generic page informing of progress of a preview page compilation.

17. The method as claimed in any one of claims 10 to 16, comprising:
receiving a request to said web server in a HTTP format, said request specifying:
a printer address; and
a job identification data.

18. The method as claimed in claim 10, further comprising the steps of:
sending a pause signal with said print job to pause printing.

19. The method as claimed in claim 10, further comprising the step of:
sending a print signal to override a paused condition of said print job.

20. A printing means for printing images, said printing means comprising:
a printer mechanism;
a preview generation means for generating a preview image of said print job,
wherein said preview generation means operates to preview said print job in a form substantially identical to a form in which said print job will be printed by said printer mechanism.

21. The printing means as claimed in claim 20, wherein said preview means comprises:
a raster image processor for rendering said print job; and
a web server configured to present said preview image.

22. The printing means as claimed in claim 20, further comprising a driver means for sending a print job to said printer mechanism wherein said driver sends a pause command, for pausing said printer mechanism, awaiting a confirmation signal for proceeding with printing said print job.

23. The printing means as claimed in claim 20, wherein said preview generation image is generated as a relatively low resolution image compared to a printed image with said printer mechanism.

24. The printing means as claimed in claim 20, wherein said preview generation means is provided with a bi-directional communications link for sending and receiving communications with said printer mechanism.
